# EUROPEAN PATENT SPECIFICATION

(11) **EP 3 853 669 B1**
(45) Date of publication and mention of the grant of the patent: **24.01.2024**
(21) Application number: 19780285.3
(22) Date of filing: 20.09.2019
(51) Int. Cl.: G03H 1/02, G03H 1/00, G03H 1/22

(54) **DIFFRACTIVE LABEL FOR A TRANSPARENT CONTAINER**
DIFFRAKTIVES ETIKETT FÜR EINEN TRANSPARENTEN BEHÄLTER
ÉTIQUETTE DIFFRACTIVE POUR UN RÉCIPIENT TRANSPARENT

(30) Priority: 21.09.2018 FI 20185792
(43) Date of publication of application: 28.07.2021
(73) Proprietor: UPM Raflatac Oy, 33310 Tampere (FI)
(72) Inventor: LEHTONEN, Pasi, 33720 Tampere (FI)
(74) Representative: Berggren Oy
(86) International application number: PCT/FI2019/050676
(87) International publication number: WO 2020/058578

(56) References cited:
- WO-A1-2019/102183
- JP-A- 2002 002 711
- US-A- 4 171 864
- US-A1- 2008 149 584
- US-A1- 2010 246 007
- US-A1- 2017 355 215

## Description

### FIELD

The present invention relates to a product comprising a label attached to a transparent container, which displays a holographic image through the container, and to a corresponding method of displaying the holographic image.

### BACKGROUND

It is known that a reflective hologram label may be attached to a bottle to indicate authenticity of the bottle. The reflective hologram label typically comprises a hologram, which comprises a reflective metal layer.

The reflective hologram label may provide a visual effect by diffractively reflecting light which impinges on the hologram. For example, the reflective hologram label may show a first pattern when viewed in a first viewing direction, and reflective hologram label may show a second different pattern when viewed in a second different viewing direction. For example, the reflective hologram label may show a first color when viewed in a first viewing direction, and reflective hologram label may show a second different color when viewed in a second different viewing direction.

Prior art, relevant to the claimed invention, can be found in the documents US2010/246007, US2008/149584, JP2002002711, US 2017/355215, US4171864, WO2019/102183.

### SUMMARY

According to the invention, there is provided a method according to claim 1.

According to the invention, there is provided a product according to claim 13.

The product, according to the claimed invention, comprises a container, a label attached to the container, and may comprise an amount of a liquid contained in the container. The product may be e.g. a labeled beverage bottle. The product may be a labeled bottle, which contains a perfume, and/or a cosmetic product. The product may be a labeled bottle, which contains a medicament.

The label comprises diffractive optical element, which is arranged to form a projection beam by diffracting light of an illuminating beam. The optical element is arranged to form a predetermined projected holographic image on a projection screen.

The projected image enhances recognizability of the product. The projected image may be utilized for determining whether the product is genuine.

The method comprises forming the projected image on the projection screen. The method may comprise comparing the projected image with a reference marking. The method may comprise determining authenticity of the product by illuminating the optical element with illuminating light, by observing the formed image, and by determining whether the shape of the formed image matches with a reference marking. The label may provide a solution for authentication of the container. The label may provide a solution for authentication of a product contained in the container. The label may a solution for authentication of a liquid contained in the container. The label may offer easy recognition for brand owners and/or for authorities. Making a counterfeit label may be difficult, due to the special equipment needed for producing the diffractive optical element. The label may be used e.g. as a sealing label and/or as a security label.

The reference marking may represent the same pattern as the image projected by the optical element. The projected image may represent a graphical pattern. The projected image may represent e.g. a text, a logo, a one-dimensional bar code, and/or a two-dimensional barcode.

The image may be projected e.g. on the inner side of the label. In other words, an inner surface of the label may operate as a projection screen. The projected image can be viewed through the container.

Alternatively, or in addition, the image may be projected to an external screen, which is separate from the container. The projection beam is transmitted to an external screen through the container. The projected image can be viewed directly or through the container.

The labeled container may deform the shape of the projected image and/or the labeled container may deform the shape of the projected image when viewed through the container. The optical element of the label may be arranged to compensate a deforming effect of the labeled container.

The container may contain a liquid. The projected image can be viewed through the liquid contained in the container. The projected image may be viewed through the liquid and through a curved portion of the container.

The projection beam may be transmitted to a screen through a curved portion of the container and through the liquid contained in the container.

The projection beam may be transmitted to an external screen through the liquid and through a curved portion of the container, in a situation where the container contains a liquid.

The curved portion of the filled container may deform the projected image due to optical refraction. The curved portion of the filled container operates as a refractive unit, which may form a magnified and/or deformed virtual image of the projected image

A container may have e.g. a substantially circular or oval cross-sectional shape. The container may operate e.g. as a cylindrical magnifying glass, which may form a magnified and/or deformed virtual image of the projected image. The container may operate as a cylindrical magnifying glass, which may form a magnified and/or deformed projected image on an external screen.

The deforming effect of the container may be taken into consideration when producing the diffractive label, so as to facilitate visual comparison of the formed image with the reference marking. In particular, the combination of the label and the container may be arranged to operate such that the aspect ratio of the formed image is substantially equal to the aspect ratio of the reference marking, so as to facilitate visual comparison of the formed image with the reference marking.

### BRIEF DESCRIPTION OF THE DRAWINGS

In the following examples, several variations will be described in more detail with reference to the appended drawings, in which
- Fig. 1: shows, by way of example, in a top view, a label, which comprises a diffractive optical element,
- Fig. 2a: shows, by way of example, in cross sectional view, a label, which comprises a diffractive optical element,
- Fig. 2b: shows, by way of example, in cross sectional view, a label, which comprises a diffractive optical element,
- Fig. 3: shows, by way of example, in a three-dimensional view, forming an image on a label portion,
- Fig. 4: shows, by way of example, in a three-dimensional view, forming an image on an external surface,
- Fig. 5a: shows, by way of example, in an axial view, forming an image on a label portion,
- Fig. 5b: shows, by way of example, in an axial view, viewing the image of Fig. 5a in a situation where the container is empty,
- Fig. 5c: shows, by way of example, in an axial view, viewing the image of Fig. 5a in a situation where the container contains a transparent liquid,
- Fig. 5d: shows, by way of example, in a side view, viewing the image of Fig. 5a in a situation where the container is empty,
- Fig. 5e: shows, by way of example, in a side view, viewing the image of Fig. 5a in a situation where the container contains a transparent liquid,
- Fig. 5f: shows, by way of example, angular width and angular height of an image,
- Fig. 6a: shows, by way of example, in an axial view, forming an image on an external surface, in a situation where the container is empty,
- Fig. 6b: shows, by way of example, in an axial view, forming an image on an external surface, in a situation where the container contains a transparent liquid,
- Fig. 6c: shows, by way of example, in a side view, forming an image on an external surface, in a situation where the container is empty,
- Fig. 6d: shows, by way of example, in a side view, forming an image on an external surface, in a situation where the container contains a transparent liquid,
- Fig. 6e: shows, by way of example, the width and the height of the projected image,
- Fig. 7a: shows, by way of example, in a three-dimensional view, forming an image on a label portion, wherein the optical element is arranged to compensate a deforming effect of the container,
- Fig. 7b: shows, by way of example, in a three-dimensional view, a deforming effect of the container,
- Fig. 7c: shows, by way of example, in cross sectional view, viewing the projected image,
- Fig. 8: shows, by way of example, in cross sectional view, a diffractive optical element, and
- Fig. 9: shows, by way of example, in cross sectional view, producing a diffractive optical element by using a pressing member,

### DETAILED DESCRIPTION

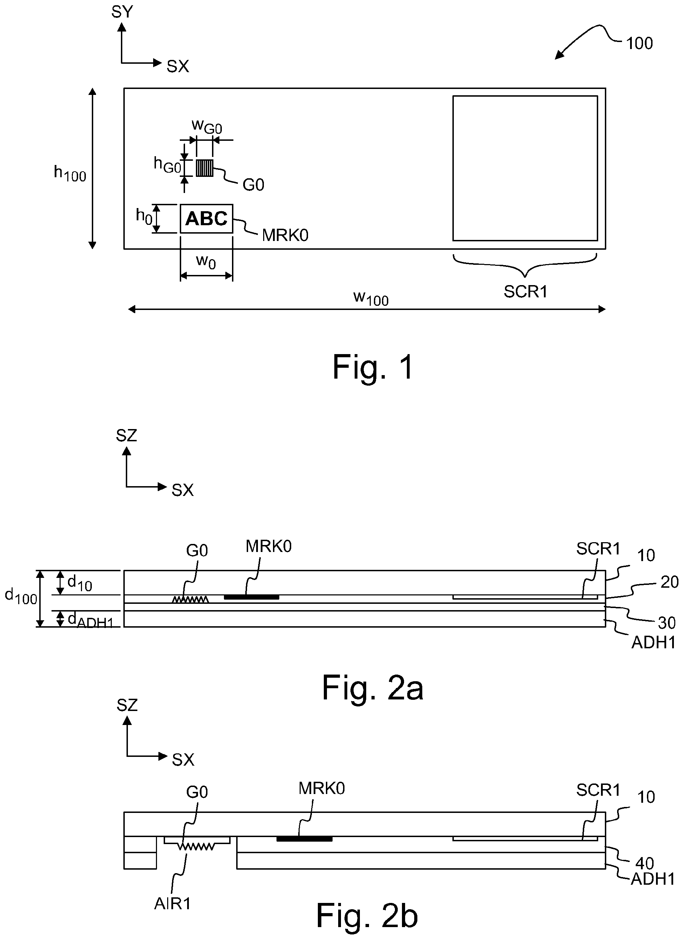

Referring to Fig. 1, the label 100 comprises a diffractive optical element G0. The diffractive optical element GO may be embedded in the label 100. The label 100 may comprise one or more diffractive optical elements G0.

The optical element GO is arranged to project a holographic image on a projection screen SCR1, by diffracting light of an illuminating beam. The image projected by the optical element GO may represent a graphical pattern. The image projected by the optical element GO may represent e.g. a trade mark, a company logo, numbers and/or text.

The label 100 may further comprise a visually detectable printed marking MRKO. The printed marking MRKO may represent the same pattern as the image projected by the optical element G0.

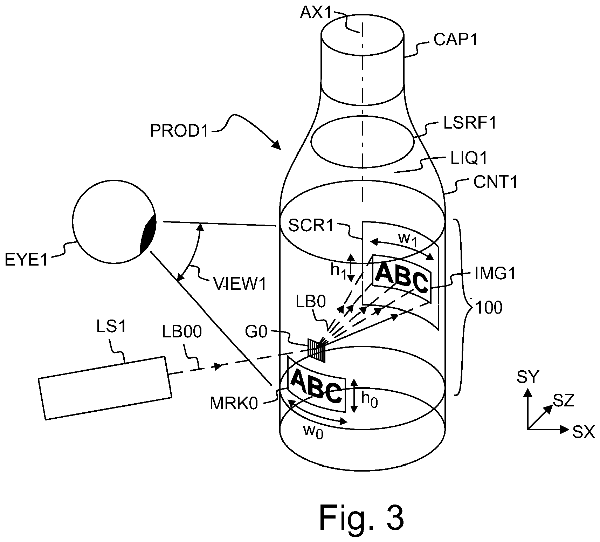

The label 100 may further comprise a screen portion SCR1. The optical element G0 is then arranged to project the holographic image IMG1 on the screen portion SCR1 of the label 100 (Fig. 3).

The label 100 may have a height h₁₀₀ and a width w₁₀₀. The diffractive optical element GO may have a height h_{G0} and a width w_{G0}. The marking MRKO may have a height h₀ and a width w₀.

The label 100 is attached to a transparent container CNT1. The circumferential distance between the center of the optical element GO and the center of the screen portion SCR1 may be e.g. in the range of 40 % to 60% of the circumference of a container CNT1. The distance between the center of the optical element GO and the center of the screen portion SCR1 may be e.g. in the range of 40 % to 60% of the circumference of a container CNT1 in a situation where the label is straight, before the label is attached to the container.

SX, SY and SZ denote orthogonal directions.

Referring to Fig. 2a, the label 100 comprises a substantially transparent carrier layer 10. The carrier layer may comprise or essentially consist of transparent plastic. The carrier layer may comprise or essentially consist of polyester (=PET), poly(methyl methacrylate) (=PMMA), or polycarbonate (=PC). The carrier layer may comprise or consist of polypropylene (=PP) or polyethylene (=PE). The thickness d₁₀ of the carrier layer 10 may be e.g. in the range of 5 µm to 200 µm, preferably in the range of 23 µm to 75 µm. The adhesive layer may have a thickness d_{ADH1}. The label 100 may have a total thickness d₁₀₀.

The diffractive element GO may be embedded on top of a carrier layer of the label. The diffractive element GO may be embedded between the carrier layer 10 and an adhesive layer ADH1.

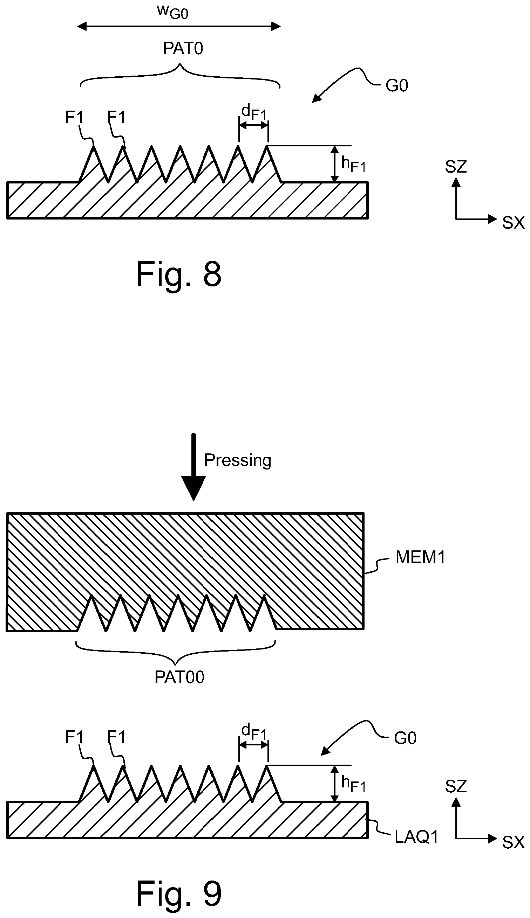

The label 100 may comprise one or more diffractive optical elements G0. The optical element G0 may comprise diffractive surface relief pattern PATO (Fig. 8). An optical element GO may be formed e.g. by applying a layer 20 of lacquer on the carrier layer 10, and by forming the optical element GO on the layer 20.

The layer 20 may comprise UV curable lacquer. The surface relief pattern PATO may be formed on the layer 20 e.g. by pressing the layer 20 with a pressing member (Fig. 9), and by exposing the lacquer to ultraviolet light in order to cure the lacquer.

The label 100 may comprise an intermediate layer 30 to cover the surface relief pattern PATO of the optical element G0. The optical element GO may comprise a plurality of microscopic diffractive features. The layer 30 may e.g. mechanically protect the diffractive features and/or the layer 30 may provide an air gap for the diffractive features. The layer 30 may cover the optical element GO such that the diffractive grooves of the optical element GO are not filled with the adhesive ADH1. The layer 30 may cover the optical element GO such that the optical element GO may have a diffractive solid-gas interface. The diffractive solid-gas interface may provide a high diffraction efficiency. The diffractive solid-gas interface may provide a high brightness of the projected image. The layer 30 may cover the optical element GO such that a gap remains between the optical element GO and the layer 30. The gap may be filled with air. The gap may be filled with gas. The layer 30 may be e.g. a transparent plastic film, which may be combined with the carrier layer 10 or with the lacquer layer 20 such that the relief pattern PATO of the optical element G0 remains between the carrier layer and the intermediate layer 30.

Alternatively, the microscopic diffractive features of the optical element GO may be coated with the transparent coating material. The transparent coating material may mechanically protect the diffractive features. The diffractive grooves of the optical element GO may be filled with the transparent coating material. The refractive index of the transparent coating material may be substantially different from the refractive index of the diffractive features of the optical element G0, in order to provide sufficient brightness of the projected image. For example, the intermediate layer 30 may be formed by applying a layer of a second lacquer on the diffractive features of the optical element G0, and by curing the second lacquer.

The reference marking MRKO may be formed e.g. by printing. The marking MRKO may be formed e.g. on the carrier layer 10 e.g. by printing.

The screen portion SCR1 may comprise light scattering material, e.g. light scattering fibers and/or light scattering particles. The screen portion SCR1 may be formed e.g. on the carrier layer 10 e.g. by printing. The screen portion SCR1 may be formed e.g. by printing with a white pigment on the carrier layer 10. The screen portion SCR1 may be formed e.g. by applying light scattering particles to the label 100. The screen portion SCR1 may be formed e.g. by applying light scattering particles to the carrier layer 10 and/or to the adhesive layer ADH1. The screen portion SCR1 may be formed e.g. by forming a rough surface on the carrier layer 10 or on the material layer 20.

The label 100 may comprise an adhesive layer ADH1. The adhesive ADH1 may be e.g. pressure sensitive adhesive (PSA) or hot melt adhesive. The label 100 may be attached to a container by using the adhesive ADH1. The label 100 may be wrapped around a container by using the adhesive ADH1.

The layer 20 may be located e.g. between the carrier layer 10 and an adhesive layer ADH1. The optical element GO may be located beneath the carrier layer 10. The carrier layer 10 may protect the optical element GO against wear.

Alternatively, the layer 20 may be located above the carrier layer 10. The carrier layer 10 may be located between the layer 20 and the adhesive layer ADH1. Forming the optical element above the carrier layer 10 may provide a bright projected image while reducing and/or minimizing manufacturing costs.

Referring to Fig. 2b, the optical element GO may also be a separate component, which is attached to the carrier layer 10 e.g. by using an adhesive. An optical element GO may also be attached to the carrier layer 10 e.g. by plastic welding (e.g. by fusing first plastic material to a second plastic material).

The label 100 may comprise an adhesive layer ADH1 for attaching the label 100 to a container.

The label 100 may comprise a spacer layer 40 to provide an air gap for the optical element G0, in a situation where the label 100 is attached to the surface of a container. The air gap may separate the optical element GO from the surface of a container. The air gap may substantially increase the brightness of the projected image. The combined thickness of the spacer layer 40 and the adhesive layer ADH1 may be greater than or equal to the thickness of the optical element G0. The symbol AIR1 may denote a gas. In particular, the gas AIR1 may be air.

Referring to Fig. 3, the label 100 is attached to a container CNT1. The optical element G0 is arranged to project an image IMG1 on a screen SCR1, by diffracting light of an illuminating light LB00. The method may comprise using a portion of the label 100 as a projection screen SCR1.

The image IMG1 projected on the screen SCR1 may become visible when the diffractive optical element GO is illuminated e.g. with an illuminating light beam LB00.

The illuminating light LB00 is obtained from a light source LS1. The illuminating light LB00 may be e.g. a laser beam obtained from a laser LS1.

The optical element GO provides a projector beam LB0, which comprises light diffracted by the diffractive features of the optical element G0. The projector beam LB0 impinges on the screen SCR1 so as to form a projected image IMG1 on the screen SCR1. The projected image IMG1 has a width w1 and a height h1.

The projected image IMG1 is visually detectable. The screen SCR1 scatters a part of the light of the projector beam LB0 to an eye EYE1 of an observer. The projected image IMG1 is then in a field of view VIEW1 of an eye EYE1 of an observer. The distance L1 between the eye EYE1 and the projected image IMG1 may be e.g. substantially equal to 1 m.

The projected image IMG1 may be compared with the reference marking MRKO in order to determine whether the shape of the projected image IMG1 matches the shape of the marking MRKO or not. If the projected image IMG1 matches the marking MRKO, this may be interpreted to be an indication that the product is genuine. If the projected image IMG1 does not match the marking MRKO, this may be interpreted to be an indication that that the product is not genuine.

The combination of the container CNT1 and the label 100 is called as product PROD1. The product PROD1 comprises the container CNT1 and the label 100 attached to the container CNT1. The product PROD1 may also be called as a labeled container. The product PROD1 may further comprise an amount of a liquid LIQ1 contained in the container CNT1. The liquid LIQ1 may have a free surface LSRF1. The container CNT1 may be closed with a cap CAP1.

The container CNT1 may optionally have an axis AX1 of symmetry. The container CNT1 is made of a substantially transparent material. The container CNT1 may be a substantially transparent bottle containing a substantially transparent liquid LIQ1.

SX, SY and SZ denote orthogonal directions. The direction SY may be substantially parallel with an axis of symmetry of the container CNT1.

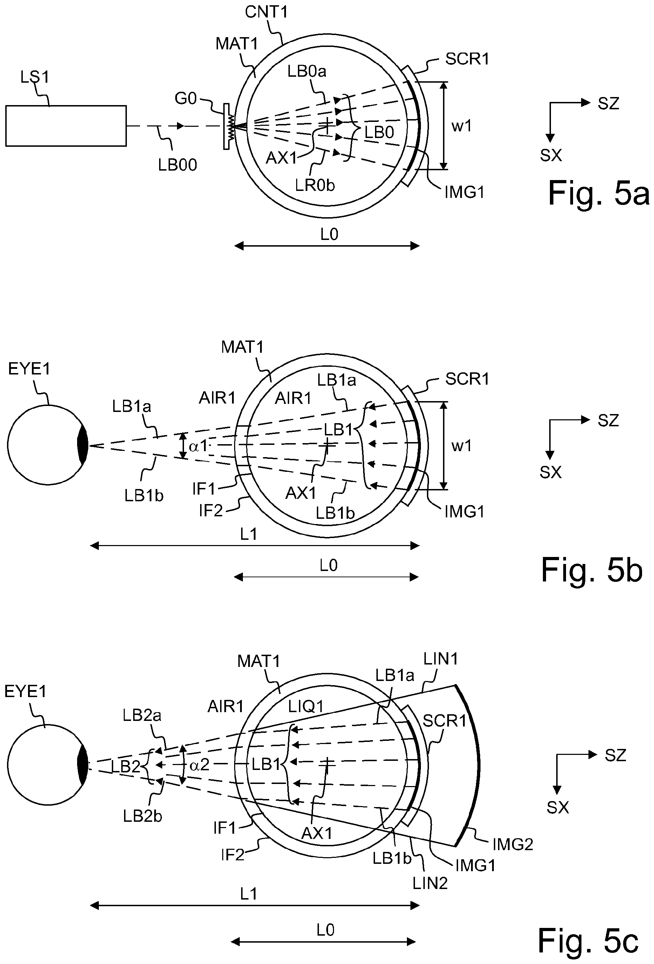

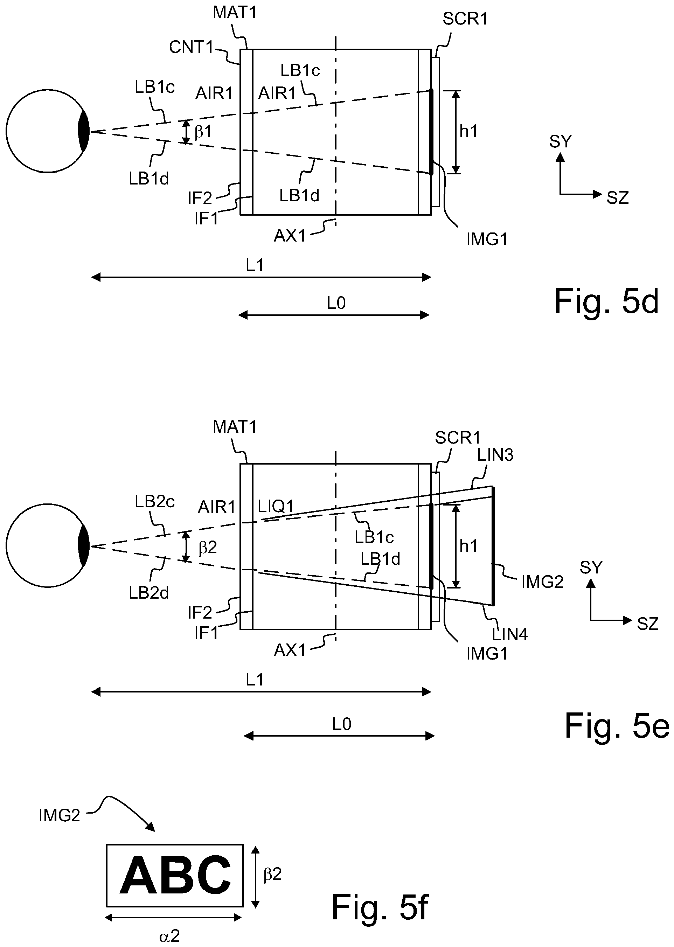

The container CNT1 may be filled with a liquid LIQ1 such that the container may operate e.g. as a substantially cylindrical magnifying glass. The container CNT1 may form a deformed virtual image IMG2 by refracting light LB1 of the image IMG1. For example, the container CNT1 may operate as a substantially cylindrical optical lens, which may form a deformed virtual image IMG2 by refracting light of the projected image IMG1. In case of the filled container, the observer may see the virtual image IMG2 instead of the projected image IMG1. The formation of the virtual image IMG2 is shown in Figs. 5c and 5e.

The virtual image IMG2 may be compared with the reference marking MRKO in order to determine whether the product is genuine. The virtual image IMG2 may be compared with the reference marking MRKO in order to determine whether the shape of the virtual image IMG2 matches the shape of the marking MRKO or not. The observer may visually compare the virtual image IMG2 with the reference marking MRKO. The label 100 may be arranged to operate such that the aspect ratio of the virtual image IMG2 is substantially equal to the aspect ratio of the reference marking MRKO, so as to facilitate the comparison. The aspect ratio of the virtual image IMG2 may be substantially different from the aspect ratio of the projected image IMG1.

The aspect ratio of the marking MRKO may mean the ratio of the width w0 of said marking to the height h0 of said marking. The aspect ratio of the projected image IMG1 may mean the ratio of the width w1 of the image IMG1 to the height h1 of the image IMG1. The aspect ratio of the virtual image IMG2 may mean the ratio of the angular width α2 of the image IMG2 to the angular height β2 of the image IMG2.

A large fraction of the area of the label 100 is substantially transparent, e.g. in order to allow viewing the projected image IMG1 and/or the virtual image IMG2 through the label 100. At least 90% of the area of the label 10 is substantially transparent. A large fraction of the area of the label 100 may also be substantially transparent, e.g. in order to provide a no-label look.

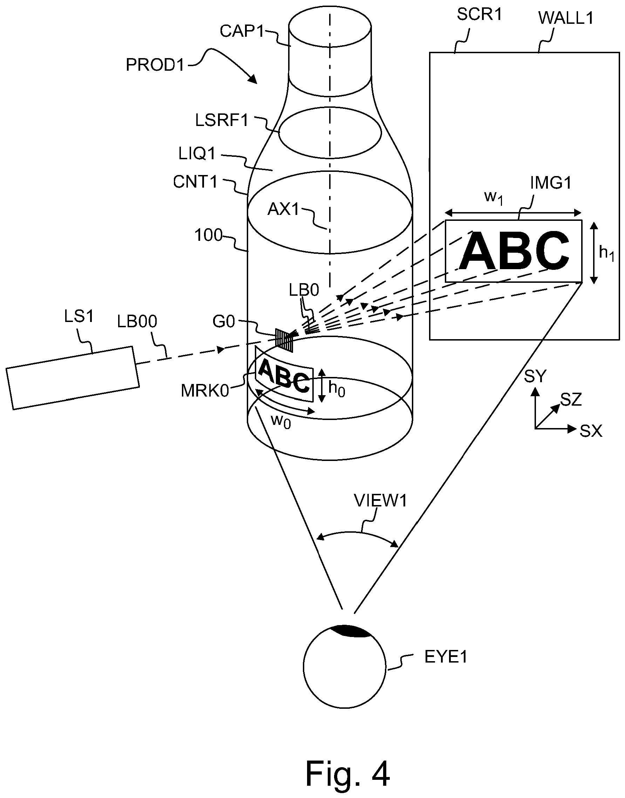

Referring to Fig. 4, the optical element GO may project the image IMG1 on an external surface WALL1. A distance L3 between the external screen portion SCR1 and the container CNT1 may be e.g. greater than 0.05 m.

The external surface may be e.g. a portion of an adjacent product, a portion of a wall of a room, or a portion of a cabinet, or a portion of a supporting rack. The external screen portion SCR1 may be substantially planar.

The external surface WALL1 may operate as a projection screen SCR1. The projected image IMG1 may have a height h1 and a width w1. The projected image IMG1 may have an aspect ratio R1 (=w1/h1).

The observer may see the projected image IMG1 without looking through the container CNT1.

Figs 5a to 5f relate to a situation where the image IMG1 is projected on curved screen portion SCR1, which is in contact with the container CNT1, or which is close to the container CNT1. For example, the image IMG1 may be projected on a portion of the label 100 (see e.g. Fig. 3).

Referring to Fig. 5a, the optical element GO of the label 100 provides a projector beam LB0 by diffracting light of the illuminating beam LB00. The projector beam LB0 is transmitted to the screen SCR1 through a first portion of the transparent wall of the container CNT1, through the transparent contents of the container, and through a second portion of the wall of the container, until the projector beam LB0 impinges on a screen portion SCR1. The wall of the container CNT1 comprises transparent material MAT1, e.g. glass or polyester. The material MAT1 may be e.g. polyethylene terephthalate (PET).

The projector beam LB0 forms the projected image IMG1 on the screen portion SCR1. The screen portion SCR1 intercepts the projector beam LB0, so as to form the projected image IMG1 on the screen portion SCR1.

The projector beam LB0 has marginal rays LB0a, LB0b, LB0c, LB0d.

The marginal rays LB0a and LB0b define the angular width of the beam LB0 in the horizontal direction, and the marginal rays LB0c, LB0d define the angular height of the beam LB0 in the vertical direction. The projector beam LB0 propagates to the screen SCR1 in a region defined by the marginal rays LB0a, LB0b, LB0c, LB0d. The vertical direction may be parallel with the axis AX1 of the container CNT1. The horizontal direction may be perpendicular to the axis AX1.

L0 denotes the distance between the optical element GO and the screen portion SCR1 attached to the container CNT1. The distance L0 between the optical element G0 and the projected image IMG1 may be e.g. greater than 20 mm, greater than 50 mm, or even greater than 100 mm. The distance L0 may be e.g. substantially equal to the diameter of the container CNT1.

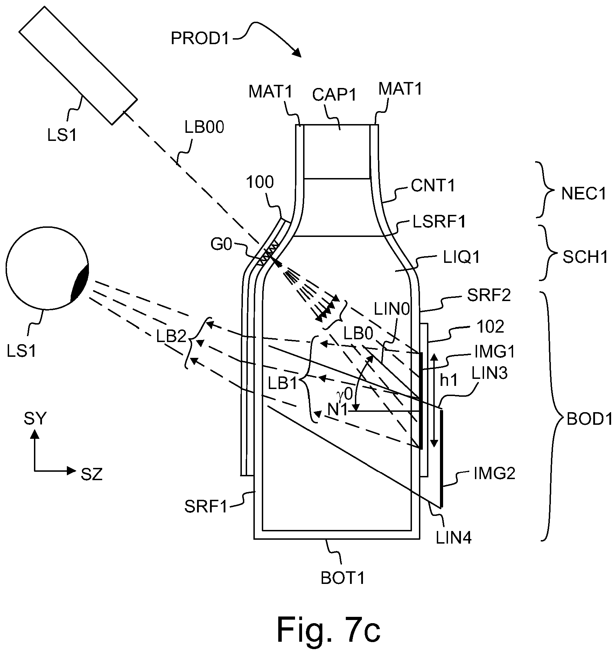

The distance L0 may be e.g. in the range of 80% to 300% of the diameter of the container CNT1. (The distance L0 may be greater than the diameter e.g. if the projection beam LB0 is inclined. See e.g. Fig. 7c).

Referring to Fig. 5b, an observer can see the projected image IMG1 through the wall(s) and through the contents of the container CNT1. EYE1 denotes an eye of the observer. L1 denotes a distance between the eye EYE1 and the projected image IMG1. The screen SCR1 scatters light of the projected image IMG1. A part of the scattered light is transmitted to the eye EYE1 through the wall(s) of the container and through the contents of the container.

LB1 denotes scattered light of the image IMG1. LB1a denotes a first marginal ray of scattered light transmitted from the image IMG1 to the eye EYE1. LB1b denotes a second marginal ray of scattered light transmitted from the image IMG1 to the eye EYE1.

The eye EYE1 may detect only a part of the scattered light LB1. The detected part of the scattered light LB1 propagating from the image IMG1 to the eye EYE1 has marginal rays LB1a, LB1b, LB1c, LB1d. The marginal rays LB1a and LB1b define the width of the detected part of the light LB1 in the horizontal direction, and the marginal rays LB1c, LB1d define the height of the detected part of the light LB1 in the vertical direction. The detected part may also be called e.g. as an observable part.

The container CNT1 has an inner surface IF1 and an outer surface IF2.

The labeled container PROD1 has an inner surface IF1 and an outer surface IF2. Light transmitted through the wall may be refracted at the inner surface IF1 and at the outer surface IF2. The refraction may cause a change of direction of propagation of light.

Figs. 5b and 5d show a situation where the light propagates inside the container in a gas. The inner surface IF1 operates as a gas-solid interface. The outer surface IF2 operates as a gas-solid interface. The wall of the container CNT1 may have a substantially constant thickness such that refraction of scattered light LB1 at the inner surface IF1 may substantially compensate refraction of scattered light LB1 at the outer surface IF2. In case an air-filled container, the direction of the light ray LB1a outside the container CNT1 may be substantially the same as the direction of the light ray LB1a inside the container CNT1.

The projected image IMG1 has a width w1 and a height h1. The eye EYE1 may see the projected image IMG1 such that the projected image IMG1 has an angular width α1 and an angular height β1. The angular width α1 is equal to w1/L1, and the angular height is equal to h1/L1.

Figs. 5c and 5e show a situation where the light propagates inside the container in a transparent liquid. The inner surface IF1 operates as a liquid-solid interface. The outer surface IF2 operates as a gas-solid interface. In this case refraction of scattered light LB1 at the inner surface IF1 does not fully compensate refraction of scattered light LB1 at the outer surface IF2. The container CNT1 operates as a refractive body, which forms refracted light LB2 by refracting the scattered light LB1. The container CNT1 forms a refracted light ray LB2a by refracting light of a scattered light LB1a. The direction of the refracted light ray LB2a may be substantially different when compared with the direction of the scattered light ray LB1b.

The labeled container forms a refracted ray LB2b from the ray LB1b, a refracted ray LB2c from the ray LB1c, and a refracted ray LB2d from the ray LB1d.

The observer sees a virtual image IMG2 in a situation where the refracted light LB2 impinges on the eye EYE1 of the observer.

The transparent container filled with the transparent liquid LIQ1 may have a curved portion, which forms a magnified and/or deformed virtual image IMG2 by refracting light of the projected image IMG1. The virtual image IMG2 may be magnified and/or deformed when compared with the projected image IMG1. In particular, the filled container may operate e.g. as a cylindrical magnifying glass, which may form a magnified and/or deformed virtual image IMG2 by refracting light of the projected image IMG1.

Light of the image IMG1 is refracted at the surfaces IF1, IF2 of the container CNT1. The eye EYE1 may detect only a part of the light refracted at the surface IF2 of the container CNT1. The detected part of the refracted light LB2 propagating from the surface IF2 to the eye EYE1 has marginal rays LB2a, LB2b, LB2c, LB2d. The marginal rays LB2a and LB2b define the width of the detected part of the light LB2 in the horizontal direction, and the marginal rays LB2c, LB2d define the height of the detected part of the light LB2 in the vertical direction. The detected part may also be called e.g. as an observable part.

The eye EYE1 sees the deformed virtual image IMG2 instead of the original projected image IMG1. The observer perceives the displayed virtual image IMG2 such that the marginal light rays LB2a, LB2b, LB2c, LB2d propagate along linear paths LIN1, LIN2, LIN3, LIN4 from the displayed virtual image IMG2 to the eye EYE1.

The container CNT1 may contain a substantially transparent substance such that the refractive index of the substance is substantially equal to the refractive index of water. The refractive index of the substance may be e.g. substantially equal to 1.33.

The carrier layer 10 of the label 100 is substantially transparent, e.g. to provide a no-label look. In that case the observer also sees the projected image IMG1 or the virtual image IMG2 through the label 100.

Referring to Fig. 5f, the angular width α2 of the virtual image IMG2 may be substantially greater than the angular width α1 of the projected image IMG1. The angular height β2 of the virtual image IMG2 may be substantially greater than the angular width β1 of the projected image IMG1. The observer sees the virtual image IMG2 e.g. in a situation where the refracted light LB2 impinges on the eye EYE1 of the observer.

The aspect ratio R2 of the virtual image IMG2 means the ratio (α2/β2) of the angular width α2 to the angular height β2. The aspect ratio R0 of the reference marking MRKO denotes the ratio (w0/h0) of the width w0 of the reference marking MRKO to the height h0 of the reference marking MRKO. The diffractive element GO of the diffractive label 100 may be arranged to operate such that the aspect ratio AR2 of the virtual image IMG2 is substantially equal to the aspect ratio ARC of the reference marking MRKO, in a situation where the container is filled with a transparent liquid LIQ1, and the distance L1 between the eye EYE1 and the projected image IMG1 is equal to 1.0 m. In particular, the diffractive label 100 may be arranged to operate such that the aspect ratio AR2 is in the range of 0.1 to 1.1 times the aspect ratio AR0. The label may be designed to operate at a predetermined wavelength of the illuminating light LB00. The illuminating beam LB00 may have a predetermined wavelength. The wavelength of the illuminating beam LB00 may be e.g. in the range of 510 to 670 nm.

The product PROD1 may be arranged to form the virtual image IMG2 by refracting light LB1 of the projected image IMG1, wherein the virtual image IMG2 is visually observed by observing the projected image IMG1 through the liquid LIQ1 and through a surface IF1 of the container CNT1.

The product PROD1 may form the virtual image IMG2 such that the relative deviation |R2-R1|/R1 of the aspect ratio R2 of the virtual image IMG2 from the aspect ratio R1 of the of the projected image IMG1 is e.g. greater than 20%.

The diffractive element GO may be arranged to operate such that the relative deviation |R2-R0|/R0 of the aspect ratio R2 of the virtual image IMG2 from the aspect ratio R0 of the of the reference marking MRKO is smaller than or equal to 5%, in a situation where the container is filled with a transparent liquid LIQ1, and the distance L1 between the eye EYE1 and the projected image IMG1 is equal to 1.0 m. The aspect ratio R2 may be e.g. in the range of 0.95 to 1.05 times the aspect ratio R0. The visually detectable virtual image IMG2 may be visually compared with the visually detectable reference marking MRKO of the product PROD1. The small relative difference between the aspect ratios R2 and R0 may facilitate visual comparison of the virtual image IMG2 with the reference marking MRKO, e.g. for determining whether the product PROD1 is genuine or not. The deforming effect (|R2-R1|/R1) of the liquid-filled container CNT1 may be e.g. greater than 20%.

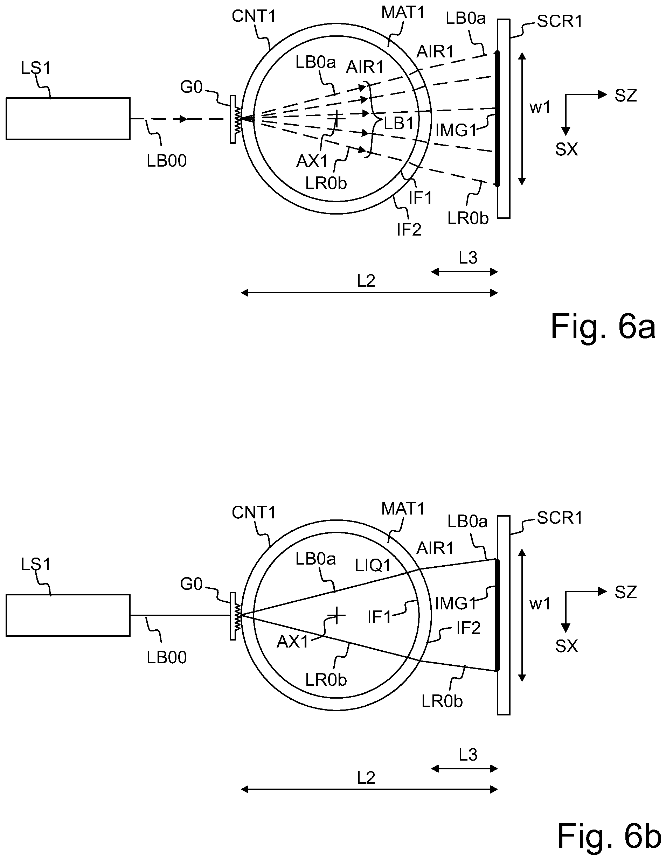

Referring to Figs. 6a to 6e, the optical element GO of the label 100 may be arranged to form a projected image IMG1 on an external screen portion SCR1. An observer may see the projected image IMG1 on the external screen portion SCR1 without looking through the container CNT1.

When projecting the image on an external screen portion SCR1, the label 100 does need to comprise a screen portion.

The external screen portion SCR1 may be e.g. a portion of a wall of a room, a portion of a label of a second adjacent container, or a portion of a cabinet, or a portion of a container rack.

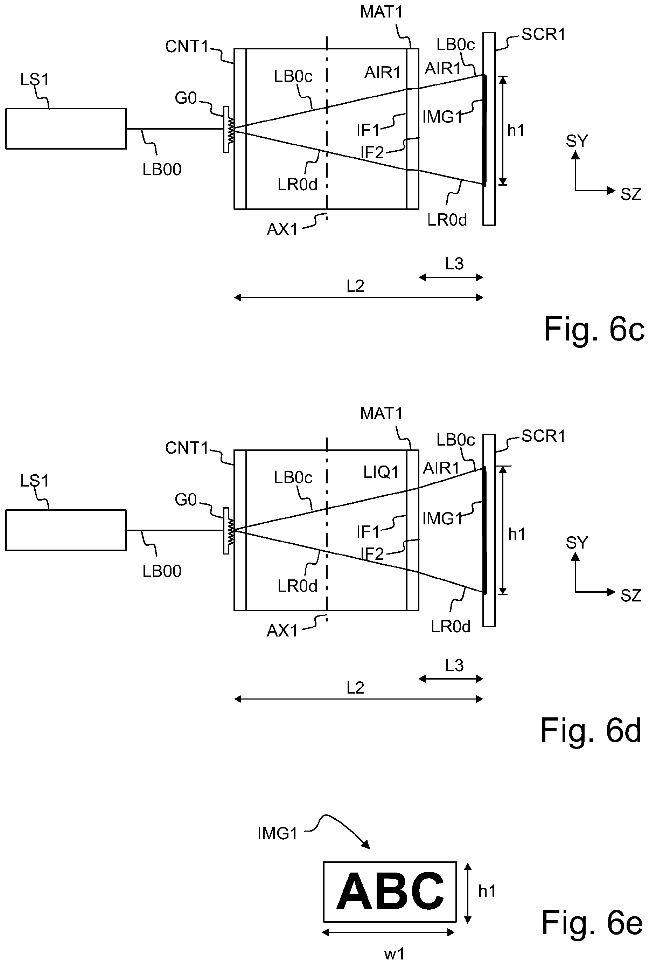

Figs 6a and 6c show a situation where the diffracted light LB0 propagates in a gas inside the container CNT1. Refraction of light LB0 at the inner surface IF1 may substantially compensate refraction of light LB0 at the outer surface IF2. Direction of the marginal ray LB0a outside the container CNT1 may be substantially the same as the direction of the marginal ray LB0a inside the container CNT1.

L2 denotes the distance between the optical element GO and the external screen portion SCR1. When projecting on an external screen SCR1, the distance L2 is e.g. substantially greater than the diameter of the container CNT1.

L3 denotes the distance between the container CNT1 and the external screen SCR1. The distance L3 may be e.g. greater than 0.05 m, greater than 0.1 m, or even greater than 0.2. Using a large distance L3 may facilitate viewing the image IMG1 on the external screen SCR1, without viewing the image IMG1 through the container CNT1.

The image IMG1 projected on the external screen SCR1 may be viewed without looking through the container CNT1.

Figs 6b and 6d show a situation where the diffracted light LB0 propagates in a transparent liquid inside the container CNT1. The container CNT1 filled with the transparent liquid operates e.g. as a cylindrical magnifying glass, which has an effect on the dimensions of the image IMG1 projected on the screen portion SCR1.

The container CNT1 provides a refracted light ray by diffracting light of the diffracted light ray LB0a. The direction of refracted light ray LB0a outside the container CNT1 may be substantially different from the direction of diffracted light ray LB0a inside the container CNT1.

The width w1 of an image IMG1 (see Fig. 6b) projected through a liquid-filled container CNT1 may be smaller than the width w1 of an image IMG1 (se Fig. 6a) projected through an air-filled container.

The height h1 of an image IMG1 (see Fig. 6d) projected through a liquid-filled container CNT1 may be greater than the width w1 of an image IMG1 (se Fig. 6c) projected through an air-filled container.

Referring to Fig. 6e, the aspect ratio R1 of the image IMG1 projected through a liquid-filled container CNT1 may be substantially different from the aspect ratio R1 of the image IMG1 projected through an air-filled container CNT1, due to the deforming effect of the filled container CNT1.

The deforming effect of the liquid-filled container CNT1 may be so large, that the relative deviation |R1-R1'|/R1' of the aspect ratio R1 of the projected image IMG1 projected through the liquid-filled container CNT1 to the external screen SCR1 is e.g. greater than 20%, when compared with the aspect ratio R1' of a comparative projected image IMG1 projected according to the same projecting geometry in a comparative situation where the container CNT1 is empty. The same geometry means that the external screen SCR1 has the same position with respect to the same diffractive optical element G0, with respect to the same illuminating beam LB00, and with respect to the same container CNT1.

The diffractive optical element GO may be arranged to provide the diffracted beam LB0 by diffracting light of the illuminating light beam LB00 such that the diffracted beam LB0 forms a predetermined projected image IMG1 on an external screen portion SCR1. The distance between the external screen portion SCR1 and the container CNT1 may be e.g. greater than 0.05 m. The container CNT1 may have a curved surface IF1, and the container CNT1 may contain an amount of a liquid LIQ1. The diffracted beam LB0 propagates to the external screen SCR1 through the liquid LIQ1 and through the curved surface IF1 of the container CNT1.

The diffractive element GO may be arranged to provide the diffracted beam LB0 such that the relative deviation |R1-R0|/R0 of the aspect ratio R1 of the projected image IMG1 from the aspect ratio R0 of the of the reference marking MRKO is e.g. smaller than or equal to 5%, in a situation where the image IMG1 is projected on the external screen SCR1 through the liquid LIQ1 and through a curved surface IF1 of the container CNT1. The aspect ratio R1 may be e.g. in the range of 0.95 to 1.05 times the aspect ratio R0. The visually detectable projected image IMG1 may be visually compared with the visually detectable reference marking MRKO. The small relative difference between the aspect ratios may facilitate visual comparison of the projected image IMG1 with the reference marking MRKO, e.g. for determining whether the product PROD1 is genuine or not. The deforming effect (|R1-R1'|/R1') of the liquid-filled container CNT1 may be e.g. greater than 20%.

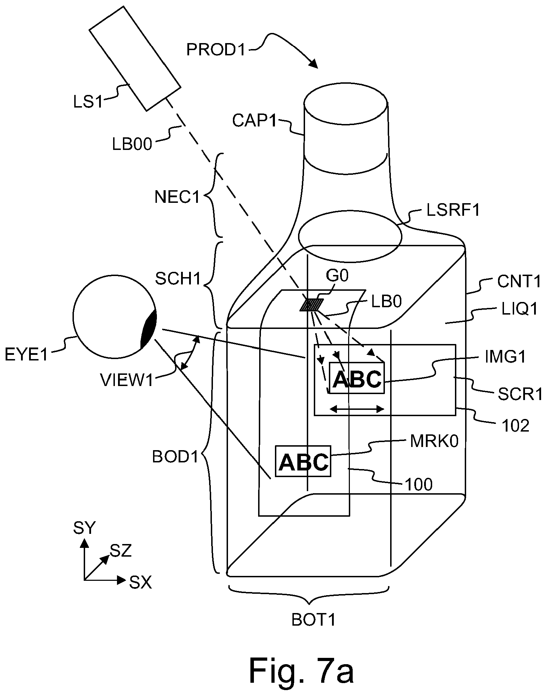

Referring to Fig. 7a, the label 100 is attached to a bottle CNT1 such that the optical element GO is located e.g. on the shoulder portion SCH1 of the bottle, wherein the projected image IMG1 is formed on a screen portion SCR1, which is located e.g. on the body portion BOD1 of the bottle CNT1. The diffracted light LB0 is arranged to impinge on the screen portion SCR1 so as to form the projected image IMG1 on the screen portion SCR1. The viewer observes the projected image IMG1 e.g. through a wall of the container CNT1. In particular, the viewer may observe the projected image IMG1 through a substantially planar face of the container CNT1. The viewer observes the projected image IMG1 e.g. through a substantially transparent portion of the label 100 and/or the viewer may observe the projected image IMG1 through an uncovered portion of the container CNT1.

The labeled container PROD1 may comprise a second label 102, which may comprise the screen portion SCR1. The shape of the projected image IMG1 may be compared with the shape of a reference marking MRK1. The label 100 and/or the second label 102 may comprise the reference marking MRK1.

The projected image IMG1 is formed on the screen SCR1, and the screen SCR1 may scatter light of the projected image IMG1. A part of the scattered light is transmitted to the eye EYE1 through the wall(s) of the container and through the contents of the container. The container may provide refracted light by refracting the scattered light. The observer sees a virtual image of the projected image in a situation where the refracted light impinges on the eye of the observer. The virtual image may be displaced with respect to the projected image, in the situation where the projected image is viewed through the planar face of the container. The virtual image and the projected image may have substantially the same shape in the situation where the projected image is viewed through the planar face of the container.

The aspect ratio of the virtual image may be substantially equal to the aspect ratio of the projected image in the situation where the projected image is viewed through the planar face of the container.

BOT1 denotes the bottom portion of the bottle CNT1, BOD1 denotes the body portion of the bottle CNT1, SCH1 denotes the shoulder portion of the bottle CNT1, and NEC1 denotes the neck portion of the bottle CNT1.

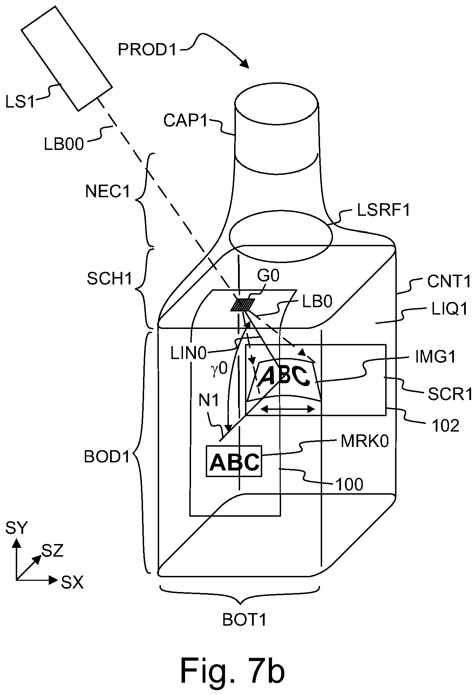

The optical element GO may be positioned e.g. at the shoulder portion SCH1 of the bottle CNT1, and the screen portion SCR1 may be located at the body portion of the bottle CNT1. The angle γ0 between the centerline LINO of the diffracted beam LB0 and the surface normal N1 of the screen portion SCR1 may be e.g. greater than 45° (see Fig. 7b). The inclined orientation of the diffracted beam LB0 may have a deforming effect on shape of the projected image IMG1. The optical element GO and the screen portion SCR1 may be positioned such that the labeled container CNT1 has a deforming effect on the shape of the projected image IMG1. The labeled container CNT1 may have a deforming effect on the aspect ratio of the projected image IMG1. The optical element G0 may be arranged to compensate the deforming effect.

Fig. 7b shows, by way of example, the deforming effect of the inclined orientation of the beam LB0 in a situation where the optical element GO is not arranged to compensate the deforming effect. The optical element GO provides the diffracted beam LB0. The diffracted beam LB0 may impinge on the screen SCR1 at an oblique angle. The diffracted beam LB0 may impinge on the screen SCR1 such that the centerline LINO of the diffracted beam LB0 is not perpendicular to the screen SCR1. The screen portion SCR1 may have a surface normal N1, which is perpendicular to the surface of the portion SCR1. The symbol yO may denote the angle between the centerline LINO of the diffracted beam LB0 and the surface normal N1 of the screen portion SCR1.

Fig. 7c shows, by way of example, formation of a virtual image IMG2 in a situation where light LB1 scattered from the screen portion SCR1 is refracted at the surface of the container CNT1 or at the surface of the label 100. The virtual image IMG2 is an image of the projected image IMG1. The observer sees the virtual image IMG2 of the projected image IMG1 in a situation where the refracted light LB2 impinges on the eye EYE1 of the observer. The virtual image IMG2 may appear to be displaced with respect to the projected image IMG1, in the situation where the projected image is viewed through the planar face SRF1 of the container. The observer may perceive the virtual image IMG2 such that marginal light rays of refracted light LB2 propagate along linear paths LIN3, LIN4 from the displayed virtual image IMG2 to the eye EYE1. The virtual image IMG2 and the projected image IMG1 may have substantially the same shape in the situation where the projected image is viewed through the planar face SRF1 of the container. The aspect ratio (R2) of the virtual image IMG2 may be substantially equal to the aspect ratio (R1) of the projected image IMG1 in the situation where the projected image IMG1 is viewed through the planar face SRF1 of the container CNT1.

The screen portion SCR1 is located e.g. on a rear face SRF2 of the bottle CNT1. A portion of the label 100 may be arranged to operate as the screen portion SCR1, or the labeled product PROD1 may comprise a second label 102, which may be arranged to operate as the screen portion SCR1.

Referring to Fig. 8, the diffractive optical element GO of the label 100 may comprise a diffractive surface relief pattern PATO to form a holographic projected image IMG1 on a screen SCR1. The surface relief pattern PATO may comprise a plurality of microscopic diffractive features F1. The positions and the dimensions of the diffractive features F1 may be determined e.g. by computer-generated holography, so as to provide a capability to project a predetermined desired image on a screen. Optical modeling may be utilized to determine a surface relief pattern PATO which provides a desired spatial intensity distribution of the diffracted light on a projection screen.

The direction of propagation of light may be significantly changed when the light is coupled out of a curved surface of the filled container. The container may deform the shape of the projected image IMG1, and/or the container may deform the shape of the virtual image IMG2. The container filled with the liquid LIQ1 may have a deforming effect on the shape of the projected image IMG1. The deforming effect of the container may be taken into account when determining the surface relief pattern PATO. The surface relief pattern PATO may be designed to compensate said deforming effect.

Optical modeling may be utilized to determine the surface relief pattern PATO such that the image IMG1 or IMG2 observed by the eye EYE1 of viewer has a predetermined shape. Optical modeling may be utilized to determine the surface relief pattern PATO such that the image IMG1 or IMG2 observed by the eye EYE1 of viewer has a predetermined aspect ratio.

In particular, optical modeling may be utilized to determine a surface relief pattern PATO which provides a predetermined projected image IMG1 on a projection screen in a predetermined optical set-up, where the container CNT1 has a predetermined shape, the diffractive element GO has a predetermined position with respect to the container CNT1, the illuminating beam LB0 has a predetermined orientation with respect to the diffractive element G0, the projection screen SCR1 has a predetermined position with respect to the diffractive element G0, the eye EYE1 of the viewer has a predetermined position with respect to the projection screen SCR1, and the container CNT1 contains a liquid substance LIQ1 which has a predetermined refractive index.

The method comprises forming the predetermined projected image IMG1 such that the illuminating beam LB0, the optical element G0, and the projection screen SCR1 are positioned according to the set-up. The image IMG1 or IMG2 displayed to a viewer may have a predetermined shape and aspect ratio in a situation where the eye of the viewer is positioned according to the set-up. The predetermined shape and aspect ratio of the displayed image may match the shape and aspect ratio of the reference marking MRKO.

The diffractive features F1 may be e.g. microscopic ridges and/or grooves.

The diffractive features may be e.g. microscopic protrusions and/or depressions. The diffractive element may comprise e.g. one or more diffractive surface relief gratings.

The optical element GO is arranged to form a holographic image IMG1 by diffracting light of an illuminating beam LB00. In particular, the optical element GO may be arranged to form a holographic image IMG1 by diffracting light of a substantially monochromatic laser beam LB00.

The optical element GO may project the image IMG1 such that the color of the image IMG1 does not depend on the position of the eye EYE1 with respect to the direction of the illuminating beam LB00.

The light for illuminating the diffractive element may be provided e.g. by using laser. A laser beam may be used as illuminating light. The light may be monochromatic light. The illuminating light may have narrow spectral bandwidth. The spectral bandwidth of the illuminating light may be e.g. smaller than 10 nm. The illuminating light may be visible light or, in a not claimed example, infrared light.

In case of visible illuminating light, also the projected image and the virtual image are visible images. In case of infrared illuminating light, also the projected image and the virtual image are infrared images. The infrared image may be detected and/or captured by using a digital camera. For example, an infrared image may be detected by using the camera of a mobile phone.

The width of the illuminating light beam LB00 and/or the effective width of the optical element GO may be smaller than a predetermined limit, in order to ensure that the projected image IMG1 may be substantially sharp also in a situation where the label 100 is attached to a curved portion of the container. The effective width of the optical element GO may be defined e.g. by an aperture of an opaque layer of the label 100 and/or by the width of the diffractive relief pattern PATO of the optical element G0. The width of the illuminating light beam LB00 may be e.g. smaller than 5 mm, advantageously smaller than 2 mm. The effective width w_{G0} of the optical element GO may be e.g. smaller than 5 mm, advantageously smaller than 2 mm.

Referring to Fig. 9, the diffractive optical element GO may be produced e.g. by molding and/or embossing.

The diffractive element GO may be formed e.g. on the carrier layer 10 and/or on a further material layer LAQ1, 20 of the label.

A production tool MEM1 may comprise a surface relief pattern PAT00. The optical element GO may be produced e.g. pressing and/or holding the production tool MEM1 against a material LAQ1. The production tool MEM1 may be e.g. an embossing tool and/or a mold. The material may be e.g. curable, moldable, thermoplastic or thermosetting material.

The material LAQ1 may be e.g. UV curable lacquer, which may be at least partly cured by exposing the material to ultraviolet light. The features F1 may be formed on the surface of the lacquer LAQ1 may pressing and/or holding the production tool MEM1 against the lacquer LAQ1. The features F1 may be cured by exposing the features F1 to ultraviolet light when holding the tool MEM1 against the lacquer LAQ1 and/or after tool MEM1 has been separated from the lacquer LAQ1.

The diffractive optical element GO of the label 100 may comprise a plurality of microscopic diffractive features F1. The height h_{F1} of the diffractive features F1 may be e.g. in the range of 0.1 µm to 1.0 µm. The distance d_{F1} between adjacent peaks of the diffractive features F1 may be e.g. in the range of 0.8 µm to 10 µm.

The surface relief pattern PAT00 of the production tool MEM1 may be formed e.g. by etching, by laser processing and/or by electroplating.

In general, the container CNT1 may contain a substantially transparent substance LIQ1. The container CNT1 may be e.g. a beverage bottle. The substance may consist essentially of water, wherein the refractive index of the substance may be e.g. substantially equal to 1.33. The substance may contain e.g. sugar and/or ethanol dissolved in water, wherein the refractive index of the substance may be e.g. in the range of 1.33 to 1.5.

The container may be e.g. a bottle containing a substantially transparent beverage, e.g. water, tea, juice, soft drink, beer, white wine, sparkling wine, vodka, alcoholic liqueur, whisky or brandy.

The substance may be e.g. a cosmetic product to enhance and/or alter the appearance of human face, skin or hair. The substance may be e.g. a cleansing agent for cleaning human face, skin or hair. The substance may be e.g. a perfume to give a scent to a human body.

The container may comprise e.g. a substantially transparent medicament in liquid form.

The projected image may indicate e.g. a trademark, a company, a manufacturer, or a geographical location associated with the substance LIQ1. The projected image may be e.g. a symbol of an organization which has approved the substance LIQ1.

The dimensions of the label 100 are selected such that the label 100 can be attached to a container CNT1. The dimensions of the label 100 is selected according to a container CNT1, such that the label 100 is used to provide a holographic image IMG1 when attached to said container CNT1. The width w₁₀₀ of the label 100 may be e.g. in the range of 40% to 150% of the circumference of the container CNT1. The height h₁₀₀ of the label 100 may be e.g. in the range of 5% to 120% of the height of the container CNT1.

The carrier layer 10 of the label 100 is substantially transparent, e.g. to provide a no-label look.

The dimensions of the label 100 may be selected according to a beverage bottle CNT1, such that the label 100 may be attached to the bottle CNT1 and such that the label 100 may be used to provide a holographic image IMG1 when attached to said bottle CNT1.

The width w₁₀₀ may be e.g. in the range of 50 mm to 300 mm, and the height h₁₀₀ may be e.g. in the range of 50 mm to 150 mm.

The label may be attached the exterior surface of a bottle to indicate authenticity of the contents of the bottle.

The label may be attached e.g. to a body portion of a bottle. The body portion means a portion of the bottle between the bottom of the bottle and the shoulder of the bottle.

The body portion of the bottle may comprise a location where the bottle has maximum diameter. The label may be attached e.g. to a location where the bottle has maximum diameter, e.g. in order to maximize the size of the projected image IMG1.

The optical element GO may be located e.g. on a cylindrical portion of the container, on an oval portion of the container, on a conical portion of the container, on a doubly curved portion of the container, or on a substantially planar portion of the container.

The projection beam LB0 is transmitted to a screen e.g. through a cylindrical portion of the container, through an oval portion of the container, through a conical portion of the container, through a doubly curved portion of the container, or through a substantially planar portion of the container.

The projected image IMG1 can be viewed directly, through a cylindrical portion of the container, through an oval portion of the container, through a conical portion of the container, through a doubly curved portion of the container, or through a substantially planar portion of the container.

The label may be attached to a neck portion and/or to a cap portion to operate as a sealing label. An intact sealing label may be interpreted to indicate that the bottle has not been opened after the bottle was sealed at the bottling plant.

The label may be attached e.g. to a neck portion of a bottle and/or to a shoulder portion of the bottle. Yet, the label may be attached e.g. to a bottom portion of the bottle.

For example, the label may be attached to a bottle such that the optical element is located on the neck portion of the bottle or on the shoulder portion of the bottle, wherein the projected image may be formed on a screen portion, which is located on the body portion of the bottle.

For example, the label may be attached to a bottle such that the optical element is located on the bottom of the bottle, wherein the projected image may be formed on a screen portion, which is located on the body portion of the bottle.

The label 100 may be an adhesive label. The label 100 may be attached to the container CNT1 by an adhesive ADH1. The adhesive ADH1 may be e.g. a pressure sensitive adhesive and/or a hot melt adhesive.

The label 100 may be a wrap-around label. The label 100 may be wrapped around a bottle. The wrapped label may be optionally shrunk around the bottle e.g. by heating such that the label may accurately conform to the shape of the bottle.

The labeled container PROD1 may comprise only one label 100. Using a single label may allow labeling at high speed and/or may ensure that the screen portion SCR1 is accurately positioned with respect to the optical element G0.

The labeled container PROD1 may comprise a first label and a second label, wherein the first label may comprise the optical element G0, and a portion of the second label may be arranged to operate as a screen portion SCR1. The labeled container PROD1 may further comprise a reference marking MRKO. The first label and/or the second label may further comprise the reference marking MRKO. The labeled container PROD1 may comprise a third label, which may comprise the reference marking MRKO.

In an not claimed embodiment, the carrier layer 10 may be made of opaque paper, which comprises an opening for transmitting the illuminating beam LB00 to the element G0. The optical element GO may be positioned such that optical element GO overlaps the opening. The reference marking MRKO may be printed on the paper of the label 100. The opaque paper may also operate as the screen portion SCR1. The paper layer 10 may be translucent such that an observer may view the projected image IMG1 also on the exterior side of the label 100.

In an not claimed embodiment, the image IMG1 may be projected on an external screen SCR1 when using an opaque label 100. The width w₁₀₀ of the label 100 may be smaller than the circumference of the container CNT1 such that the label 100 does not block the projector beam LB0. For example, the carrier layer 10 may be made of opaque paper, which comprises an opening for transmitting the illuminating beam LB00 to the element G0. The optical element GO may be positioned such that optical element GO overlaps the opening. The reference marking MRKO may be printed on the paper of the label 100.

The materials of the label 100 may be optionally selected such that the diffractive optical element is irreversibly destroyed when the label is heated to a temperature higher than 80°C. A label may be separated from a container e.g. by washing the container in hot alkaline solution. One or more materials of the label may be selected such that the diffractive optical element GO is irreversibly destroyed when the label is immersed in a heated alkaline solution, so as to make unauthorized re-use of the optical element GO more difficult.

For the person skilled in the art, it will be clear that modifications and variations of the devices and the methods according to the present invention are perceivable within the scope of the appended claims. The figures are schematic. The particular embodiments described above with reference to the accompanying drawings are illustrative only and not meant to limit the scope of the invention, which is defined by the appended claims.

## Claims

1. A method for displaying an holographic image by using a label (100) attached to a substantially transparent container (CNT1), wherein a product (PROD1) comprises the container (CNT1) and the label (100) attached to the container (CNT1), the label (100) comprising a transmissive diffractive optical element (G0), the method comprising:
- providing a diffracted beam (LBO) by illuminating the diffractive optical element (G0) with an illuminating light beam (LB00), and
- forming a projected holographic image (IMG1) by projecting light of the diffracted beam (LBO) to a screen portion (SCR1) through the substantially transparent container (CNT1),
**characterized in that** the label (100) comprises a substantially transparent carrier layer (10), and wherein at least 90% of the area of the label (100) is substantially transparent.

2. The method of claim 1, wherein the product (PROD1) further comprises an amount of a liquid (LIQ1), wherein the method further comprises forming the projected image (IMG1) on an external screen portion (SCR1), wherein a distance between the external screen portion (SCR1) and the container (CNT1) is greater than 0.05 m, and wherein the light of the diffracted beam (LBO) is projected to the external screen portion (SCR1) through the liquid (LIQ1) and through a curved surface (IF1) of the container (CNT1).

3. The method of claim 1 or 2, comprising comparing the projected image (IMG1) with a reference marking (MRKO), in order to determine whether the product (PROD1) is authentic.

4. The method according to any of the claims 1 to 3, wherein the product (PROD1) comprises a reference marking (MRKO), wherein the aspect ratio (w0/h0) of the reference marking (MRKO) is substantially equal to the aspect ratio (w1/h1) of the projected image (IMG1), wherein the aspect ratio (w0/h0) of the reference marking (MRKO) means the ratio of the width (w0) of the reference marking (MRKO) to the height (h0) of the reference marking (MRKO), and wherein the aspect ratio (w1/h1) of the projected image (IMG1) means the ratio of the width (w1) of the projected image (IMG1) to the height (h1) of the projected image (IMG1).

5. The method of claim 4, wherein the label (100) comprises the reference marking (MRKO).

6. The method of claim 1, wherein the product (PROD1) further comprises an amount of a liquid (LIQ1), and the screen portion (SCR1), wherein the method further comprises forming a virtual image (IMG2) by refracting light (LB1) of the projected image (IMG1) with the liquid (LlQ1), wherein the virtual image (IMG2) is observable by observing the projected image (IMG1) through the liquid (LIQ1) and through a surface (IF1) of the container (CNT1).

7. The method of claim 6, comprising comparing the virtual image (IMG2) with a reference marking (MRKO), in order to determine whether the product (PROD1) is authentic.

8. The method of claim 6 or 7, wherein the container (CNT1) together with the liquid (LIQ1) are arranged to refract light such that the virtual image (IMG2) is a deformed virtual image of the projected image (IMG1).

9. The method according to any of the claims 6 to 8, wherein the product (PROD1) comprises a reference marking (MRKO), wherein the aspect ratio (w0/h0) of the reference marking (MRKO) matches the aspect ratio (α2/β2) of the virtual image (IMG2), wherein the aspect ratio of the virtual image (IMG2) means the ratio (α2/β2) of the angular width (α2) of the virtual image (IMG2) to the angular height (β2) of the virtual image (IMG2), and wherein the aspect ratio (w0/h0) of the reference marking (MRKO) means the ratio of the width (w0) of the reference marking (MRKO) to the height (h0) of the reference marking (MRKO).

10. The method according to any of the claims 6 to 9, wherein the label (100) comprises the reference marking (MRKO).

11. The method according to any of the claims 1 to 5 and of claims 7 to 10, wherein the product (PROD1) comprises the screen portion (SCR1).

12. The method according to any of the claims 1 to 11, wherein the centerline (LINO) of the diffracted beam (LBO) is inclined with respect to a surface normal (N1) of the screen portion (SCR1).

13. A product (PROD1), comprising:
- a substantially transparent container (CNT1),
- a label (100) attached to the container (CNT1), the label (100) comprising a transmissive diffractive optical element (G0),
wherein the diffractive optical element (G0) is arranged to provide a diffracted beam (LBO) by diffracting light of an illuminating light beam (LB00), such that the diffracted beam (LBO) forms a predetermined projected holographic image (IMG1) on a screen portion (SCR1) in a situation where the diffracted beam (LBO) is projected to the screen portion (SCR1) through the substantially transparent container (CNT1), **characterized in that** the label (100) comprises a substantially transparent carrier layer (10), and wherein at least 90% of the area of the label (100) is substantially transparent.

14. The product (PROD1) of claim 13 comprising an amount of a substantially transparent liquid (LIQ1) contained in the container (CNT1).

15. The product (PROD1) of claim 13 or 14, wherein the container (CNT1) is a bottle, the optical element (G0) is located on a shoulder portion (SCH1) of the bottle, and wherein the screen portion (SCR1) is located on a body portion (BOD1) of the bottle.

## Patentansprüche

1. Verfahren zum Anzeigen eines holographischen Bildes unter Verwendung eines Etiketts (100), das an einem im Wesentlichen transparenten Behälter (CNT1) angebracht ist, wobei ein Produkt (PROD1) den Behälter (CNT1) und das an dem Behälter (CNT1) angebrachte Etikett (100) umfasst, wobei das Etikett (100) ein durchlässiges beugendes optisches Element (G0) umfasst, das Verfahren umfassend:
- Bereitstellen eines gebeugten Strahls (LBO) durch Beleuchten des beugenden optischen Elements (G0) mit einem Beleuchtungslichtstrahl (LB00), und
- Erzeugen eines projizierten holographischen Bildes (IMG1) durch Projizieren von Licht des gebeugten Strahls (LBO) auf einen Schirmabschnitt (SCR1) durch den im Wesentlichen transparenten Behälter (CNT1),
**dadurch gekennzeichnet, dass** das Etikett (100) eine im Wesentlichen transparente Trägerschicht (10) umfasst, wobei mindestens 90 % des Bereichs des Etiketts (100) im Wesentlichen transparent ist.

2. Verfahren nach Anspruch 1, wobei das Produkt (PROD1) ferner eine Menge einer Flüssigkeit (LIQ1) umfasst, wobei das Verfahren ferner das Erzeugen des projizierten Bildes (IMG1) auf einem externen Schirmabschnitt (SCR1) umfasst, wobei ein Abstand zwischen dem externen Schirmabschnitt (SCR1) und dem Behälter (CNT1) größer ist als 0,05 m, und wobei das Licht des gebeugten Strahls (LBO) durch die Flüssigkeit (LIQ1) und durch eine gekrümmte Oberfläche (IF1) des Behälters (CNT1) auf den externen Schirmabschnitt (SCR1) projiziert wird.

3. Verfahren nach Anspruch 1 oder 2, umfassend das Vergleichen des projizierten Bildes (IMG1) mit einer Referenzmarkierung (MRKO), um zu bestimmen, ob das Produkt (PROD1) echt ist.

4. Verfahren nach einem der Ansprüche 1 bis 3, wobei das Produkt (PROD1) eine Referenzmarkierung (MRKO) umfasst, wobei das Aspektverhältnis (w0/h0) der Referenzmarkierung (MRKO) im Wesentlichen gleich dem Aspektverhältnis (w1/h1) des projizierten Bildes (IMG1) ist, wobei das Aspektverhältnis (w0/h0) der Referenzmarkierung (MRKO) das Verhältnis der Breite (w0) der Referenzmarkierung (MRKO) zu der Höhe (h0) der Referenzmarkierung (MRKO) bedeutet, und wobei das Aspektverhältnis (w1/h1) des projizierten Bildes (IMG1) das Verhältnis der Breite (w1) des projizierten Bildes (IMG1) zu der Höhe (h1) des projizierten Bildes (IMG1) bedeutet.

5. Verfahren nach Anspruch 4, wobei das Etikett (100) die Referenzmarkierung (MRKO) umfasst.

6. Verfahren nach Anspruch 1, wobei das Produkt (PROD1) ferner eine Menge einer Flüssigkeit (LIQ1) und den Schirmabschnitt (SCR1) umfasst, wobei das Verfahren ferner das Erzeugen eines virtuellen Bildes (IMG2) durch Brechung von Licht (LB1) des projizierten Bildes (IMG1) mit der Flüssigkeit (LIQ1) umfasst, wobei das virtuelle Bild (IMG2) durch Beobachtung des projizierten Bildes (IMG1) durch die Flüssigkeit (LIQ1) und durch eine Oberfläche (IF1) des Behälters (CNT1) beobachtet werden kann.

7. Verfahren nach Anspruch 6, umfassend das Vergleichen des projizierten Bildes (IMG2) mit einer Referenzmarkierung (MRKO), um zu bestimmen, ob das Produkt (PROD1) echt ist.

8. Verfahren nach Anspruch 6 oder 7, wobei der Behälter (CNT1) zusammen mit der Flüssigkeit (LIQ1) so angeordnet ist, dass er das Licht so bricht, dass das virtuelle Bild (IMG2) ein deformiertes virtuelles Bild des projizierten Bildes (IMG1) ist.

9. Verfahren nach einem der Ansprüche 6 bis 8, wobei das Produkt (PROD1) eine Referenzmarkierung (MRKO) umfasst, wobei das Aspektverhältnis (w0/h0) der Referenzmarkierung (MRKO) mit dem Aspektverhältnis (α2/β2) des virtuellen Bildes (IMG2) übereinstimmt, wobei das Aspektverhältnis des virtuellen Bildes (IMG2) das Verhältnis (α2/β2) der Winkelbreite (α2) des virtuellen Bildes (IMG2) zu der Winkelhöhe (β2) des virtuellen Bildes (IMG2) bedeutet, und wobei das Aspektverhältnis (w0/h0) der Referenzmarkierung (MRKO) das Verhältnis der Breite (w0) der Referenzmarkierung (MRKO) zu der Höhe (h0) der Referenzmarkierung (MRKO) bedeutet.

10. Verfahren nach einem der Ansprüche 6 bis 9, wobei das Etikett (100) die Referenzmarkierung (MRKO) umfasst.

11. Verfahren nach einem der Ansprüche 1 bis 5 und der Ansprüche 7 bis 10, wobei das Produkt (PROD1) den Schirmabschnitt (SCR1) umfasst.

12. Verfahren nach einem der Ansprüche 1 bis 11, wobei die Mittellinie (LIN0) des gebeugten Strahls (LBO) in Bezug auf eine Oberflächennormale (N1) des Schirmabschnitts (SCR1) geneigt ist.

13. Produkt (PROD1), umfassend:
- einen im Wesentlichen transparenten Behälter (CNT1),
- ein an dem Behälter (CNT1) angebrachtes Etikett (100), wobei das Etikett (100) ein durchlässiges, beugendes optisches Element (G0) umfasst,
wobei das beugende optische Element (G0) angeordnet ist, um einen gebeugten Strahl (LBO) durch Beugung von Licht eines Beleuchtungslichtstrahls (LB00) bereitzustellen, sodass der gebeugte Strahl (LBO) ein vorbestimmtes projiziertes holografisches Bild (IMG1) auf einem Schirmabschnitt (SCR1) in einer Situation bildet, in der der gebeugte Strahl (LBO) auf den Schirmabschnitt (SCR1) durch den im Wesentlichen transparenten Behälter (CNT1) projiziert wird, **dadurch gekennzeichnet, dass** das Etikett (100) eine im Wesentlichen transparente Trägerschicht (10) umfasst, wobei mindestens 90 % des Bereichs des Etiketts (100) im Wesentlichen transparent ist.

14. Produkt (PROD1) nach Anspruch 13, umfassend eine Menge einer im Wesentlichen transparenten Flüssigkeit (LIQ1), die in dem Behälter (CNT1) enthalten ist.

15. Produkt (PROD1) nach Anspruch 13 oder 14, wobei es sich bei dem Behälter (CNT1) um eine Flasche handelt, das optische Element (G0) an einer Stelle des Schulterabschnitts (SCH1) der Flasche angeordnet ist, und wobei der Schirmabschnitt (SCR1) an einem Körperabschnitt (B0D1) der Flasche angeordnet ist.

## Revendications

1. Procédé d'affichage d'une image holographique en utilisant une étiquette (100) apposée sur un récipient sensiblement transparent (CNT1), dans lequel un produit (PROD1) comprend le récipient (CNT1) et l'étiquette (100) apposée sur le récipient (CNT1), l'étiquette (100) comprenant un élément optique diffractif transmissif (G0), le procédé comprenant :
- la fourniture d'un faisceau diffracté (LBO) en éclairant l'élément optique diffractif (G0) avec un faisceau lumineux d'éclairage (LB00), et
- la formation d'une image holographique projetée (IMG1) en projetant la lumière du faisceau diffracté (LBO) sur une partie d'écran (SCR1) à travers le récipient sensiblement transparent (CNT1),
**caractérisé en ce que** l'étiquette (100) comprend une couche de support (10) sensiblement transparente, et dans lequel au moins 90 % de la surface de l'étiquette (100) est sensiblement transparente.

2. Procédé selon la revendication 1, dans lequel le produit (PROD1) comprend en outre une quantité d'un liquide (LIQ1), dans lequel le procédé comprend en outre la formation de l'image projetée (IMG1) sur une partie d'écran externe (SCR1), dans lequel une distance entre la partie d'écran externe (SCR1) et le récipient (CNT1) est supérieure à 0,05 m, et dans lequel la lumière du faisceau diffracté (LBO) est projetée vers la partie d'écran externe (SCR1) à travers le liquide (LIQ1) et à travers une surface incurvée (IF1) du récipient (CNT1).

3. Procédé selon la revendication 1 ou 2, comprenant la comparaison de l'image projetée (IMG1) avec un marquage de référence (MRKO), afin de déterminer si le produit (PROD1) est authentique.

4. Procédé selon l'une quelconque des revendications 1 à 3, dans lequel le produit (PROD1) comprend un marquage de référence (MRKO), dans lequel le rapport d'aspect (w0/h0) du marquage de référence (MRKO) est sensiblement égal au rapport d'aspect (w1/h1) de l'image projetée (IMG1), dans lequel le rapport d'aspect (w0/h0) du marquage de référence (MRKO) désigne le rapport entre la largeur (w0) du marquage de référence (MRKO) et la hauteur (h0) du marquage de référence (MRKO), et dans lequel le rapport d'aspect (w1/h1) de l'image projetée (IMG1) désigne le rapport entre la largeur (w1) de l'image projetée (IMG1) et la hauteur (h1) de l'image projetée (IMG1).

5. Procédé selon la revendication 4, dans lequel l'étiquette (100) comprend le marquage de référence (MRKO).

6. Procédé selon la revendication 1, dans lequel le produit (PROD1) comprend en outre une quantité d'un liquide (LIQ1), et la partie d'écran (SCR1), dans lequel le procédé comprend en outre la formation d'une image virtuelle (IMG2) par réfraction de la lumière (LB1) de l'image projetée (IMG1) avec le liquide (LIQ1), dans lequel l'image virtuelle (IMG2) est observable en observant l'image projetée (IMG1) à travers le liquide (LIQ1) et à travers une surface (IF1) du récipient (CNT1).

7. Procédé selon la revendication 6, comprenant la comparaison de l'image virtuelle (IMG2) avec un marquage de référence (MRKO), afin de déterminer si le produit (PROD1) est authentique.

8. Procédé selon la revendication 6 ou 7, dans lequel le récipient (CNT1) ainsi que le liquide (LIQ1) sont agencés pour réfracter la lumière de telle sorte que l'image virtuelle (IMG2) soit une image virtuelle déformée de l'image projetée (IMG1).

9. Procédé selon l'une quelconque des revendications 6 à 8, dans lequel le produit (PROD1) comprend un marquage de référence (MRKO), dans lequel le rapport d'aspect (w0/h0) du marquage de référence (MRKO) correspond au rapport d'aspect (α2/β2) de l'image virtuelle (IMG2), dans lequel le rapport d'aspect de l'image virtuelle (IMG2) désigne le rapport (α2/β2) entre la largeur angulaire (α2) de l'image virtuelle (IMG2) et la hauteur angulaire (β2) de l'image virtuelle (IMG2), et dans lequel le rapport d'aspect (w0/h0) du marquage de référence (MRKO) désigne le rapport entre la largeur (w0) du marquage de référence (MRKO) et la hauteur (h0) du marquage de référence (MRKO).

10. Procédé selon l'une quelconque des revendications 6 à 9, dans lequel l'étiquette (100) comprend le marquage de référence (MRKO).

11. Procédé selon l'une quelconque des revendications 1 à 5 et des revendications 7 à 10, dans lequel le produit (PROD1) comprend la partie d'écran (SCR1).

12. Procédé selon l'une quelconque des revendications 1 à 11, dans lequel la ligne centrale (LINO) du faisceau diffracté (LBO) est inclinée par rapport à une normale à la surface (N1) de la partie d'écran (SCR1).

13. Produit (PROD1), comprenant :
- un récipient sensiblement transparent (CNT1),
- une étiquette (100) apposée sur le récipient (CNT1), l'étiquette (100) comprenant un élément optique diffractif transmissif (G0),
dans lequel l'élément optique diffractif (G0) est agencé pour fournir un faisceau diffracté (LBO) par diffraction de la lumière d'un faisceau lumineux d'éclairage (LB00), de telle sorte que le faisceau diffracté (LBO) forme une image holographique projetée prédéterminée (IMG1) sur une partie d'écran (SCR1) dans une situation dans laquelle le faisceau diffracté (LBO) est projeté vers la partie d'écran (SCR1) à travers le récipient sensiblement transparent (CNT1), **caractérisé en ce que** l'étiquette (100) comprend une couche de support (10) sensiblement transparente, et dans lequel au moins 90 % de la surface de l'étiquette (100) est sensiblement transparente.

14. Produit (PROD1) selon la revendication 13, comprenant une quantité d'un liquide sensiblement transparent (LIQ1) contenue dans le récipient (CNT1).

15. Produit (PROD1) selon la revendication 13 ou 14, dans lequel le récipient (CNT1) est une bouteille, l'élément optique (G0) est situé sur une partie de l'épaule (SCH1) de la bouteille, et dans lequel la partie d'écran (SCR1) est située sur une partie du corps (BOD1) de la bouteille.
